Europäisches Patentamt

European Patent Office

Office européen des brevets

(11) Veröffentlichungsnummer: **0 282 918 B1**

(12) # EUROPÄISCHE PATENTSCHRIFT

(45) Veröffentlichungstag der Patentschrift: **13.05.92**

(51) Int. Cl.5: **B29C 47/02**

(21) Anmeldenummer: **88103858.2**

(22) Anmeldetag: **11.03.88**

(54) **Profilleiste, insbesondere aus Gummi, sowie Verfahren zur Herstellung einer solchen.**

(30) Priorität: **19.03.87 DE 3708889**

(43) Veröffentlichungstag der Anmeldung:
**21.09.88 Patentblatt 88/38**

(45) Bekanntmachung des Hinweises auf die
Patenterteilung:
**13.05.92 Patentblatt 92/20**

(84) Benannte Vertragsstaaten:
**DE ES FR GB IT SE**

(56) Entgegenhaltungen:
FR-A- 2 324 851      FR-A- 2 352 942
GB-A- 2 001 906      GB-A- 2 052 318
GB-A- 2 095 715      US-A- 3 371 447
US-A- 3 550 246      US-A- 4 094 056

(73) Patentinhaber: **Gebr. Happich GmbH
Postfach 10 02 49 Clausenbrücke 1
W-5600 Wuppertal 1(DE)**

(72) Erfinder: **Schröder, Franz
Hagelsiepen 1
W-5609 Hückeswagen(DE)**
Erfinder: **Strutz, Gerd
Eiche 9
W-5630 Schwelm(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf eine Profilleiste insbesondere aus Gummi, vornehmlich für Fahrzeuge, mit einem U-förmigen Hauptteil, einer daran angeformten Dichtlippe und mit einer im Hauptteil eingelagerten, aus einem Metallband gebildeten Verstärkungseinlage, die einen U-förmig profilierten Querschnitt aufweist und aus zumindest einem durchlaufenden Steg mit einer Vielzahl von daran beidseitig angeordneten, senkrecht zum Steg und parallel zueinander ausgerichteten Sprossen besteht, wobei der Steg und die Sprossen jeweils über ihre gesamte Länge eine gleichbleibende Dicke aufweisen. Die Erfindung bezieht sich weiterhin auf ein Verfahren zur Herstellung einer solchen Profilleiste, wobei zunächst aus wenigstens einem Metallband wenigstens eine aus zumindest einem durchlaufenden Steg und einer Vielzahl von quer zur Bandlängsachse nebeneinander angeordneten, mit dem Steg beidseitig verbundenen Sprossen bestehende, einen etwa U-förmig profilierten Querschnitt aufweisende Verstärkungseinlage gefertigt und diese hiernach im Extrusionsverfahren insbesondere mit Gummi umspritzt wird. Die Erfindung geht aus von einem durch die FR-A- 2 352 942 repräsentierten Stand der Technik.

Profilleisten aus Gummi od. dgl. für z.B. Fahrzeuge, die eine eingelagerte, auch als Gerüstband bezeichnete, flexible Verstärkungseinlage aufweisen, sind in den verschiedensten Ausführungsformen bekannt. Solche Profilleisten werden u.a. als Dicht-, Fensterführungs-, Schachtabdichtungs-, Kantenschutz-, Abdeckungs-, u. dgl. Profilleisten eingesetzt. Die genannten Profilleisten haben also miteinander gemeinsam, daß sie eine flexible, biegeelastische, in der Regel metallische Verstärkungseinlage aufweisen. Es gibt nun verschiedene Verfahren zum Herstellen von Verstärkungseinlagen und demgemäß auch unterschiedlich ausgebildete Verstärkungseinlagen. Die als klassisch zu bezeichnende Ausbildung, vgl. die bereits erwähnte FR-A- 2 352 942, besteht aus einem Gitterband mit zumindest einem durchlaufenden Steg, der ein- oder beidseitig mit nebeneinander angeordneten Sprossen verbunden ist. Der Steg und die Sprossen werden dadurch gebildet, daß aus einem bandförmigen Ausgangsmaterial fensterartige Öffnungen ausgestanzt werden. Nach einem anderen bekannten Verfahren (GB-A-2 052 318), wird ein bandförmiges Ausgangsmaterial geschlitzt und sodann gestreckt, so daß aus den Schlitzen wiederum fensterartige Öffnungen entstehen. Bisher ist man davon ausgegangen, daß bei der Herstellung von mit Verstärkungseinlagen bewehrten Profilleisten, die bei der Montage einem Biegeprozeß unterworfen werden müssen, fensterartige Ausstanzungen oder Öffnungen in den Verstärkungseinlagen erforderlich sind, damit einerseits die Profilleisten leicht gebogen werden können und andererseits ein Verbund des Gummimaterials der Profilleisten durch die Ausstanzungen oder Löcher hindurch gewährleistet ist. Deshalb hat man es auch bisher in Kauf genommen, daß die Oberflächengüte der Profilleisten nicht befriedigend ist oder man ist hergegangen, eine zufriedenstellende Oberflächengüte der Profilleisten durch eine nachträgliche Kaschierung der Profilleisten mit Textilmaterial od. dgl. herbeizuführen, was aber einen erheblichen Fertigungsaufwand und beträchtlich erhöhte Herstellungskosten bedeutet. Die nicht zufriedenstellende Oberflächengüte herkömmlicher Profilleisten ist darauf zurückzuführen, daß sich die quer zur Profillängsachse erstreckenden Sprossen der Verstärkungseinlagen außenseitig am Profilleistenkörper sichtbar abdrükken, so daß das Aussehen der Profilleisten zu wünschen übrig läßt.

Eine optisch leicht verbesserte Ausführung einer Profilleiste ist durch die US-A- 3,371,447 bekannt geworden. Bei der Herstellung dieser Profilleiste wird das metallische Bandmaterial der Verstärkungseinlage quer zur Bandlängsrichtung mit Schlitzen versehen und sodann gestreckt, so daß aus den Schlitzen fensterartige Öffnungen und aus den zwischen den Schlitzen befindlichen Bereichen lanzenförmige Sprossen entstehen. Zum Strecken des mit Schlitzen versehenen Bandmaterials wird dasselbe an den durchlaufenden Randbereichen gewalzt, derart, daß es hier zu einer Materialverdünnung kommt. Dabei befinden sich in einem der Randbereiche kurz vor dem Längsrand endende Schlitze, die beim Walzen nicht zu fensterartigen Öffnungen erweitert werden. Nur in diesem einen Randbereich der Verstärkungseinlage sind nicht geöffnete Schlitze vorhanden und nur in diesem einen Randbereich weist die fertige Profilleiste eine zufriedenstellende Oberflächengüte auf.

Der Erfindung liegt nun die Aufgabe zugrunde, eine Profilleiste zu schaffen, die einfach und kostengünstig herzustellen ist und ein verbessertes Aussehen aufweist sowie ein Verfahren zur Herstellung einer solchen Profilleiste aufzuzeigen, mit dem bei vergleichsweise geringem Fertigungsaufwand Profilleisten hergestellt werden können, die nicht nur die technischen sondern auch die ästhetischen Anforderungen erfüllen.

Zur Lösung dieser Aufgabe ist bei einer Profilleiste der eingangs näher erwähnten Art erfindungsgemäß vorgesehen, daß die beidseitige Anordnung der Sprossen am Steg so getroffen ist, daß die Sprossen jeweils über ihre gesamte Länge mit ihren Längsrändern abstandsfrei aneinanderliegen, so daß die Profilleiste eine glattwandige Außenfläche aufweist. Dabei kann noch vorgesehen sein, daß die Verstärkungseinlage beidseitig eine Haftvermittler-Beschichtung aufweist, wodurch ein sicherer Verbund zwischen der Verstärkungseinlage und dem insbesondere Gummimaterial der Profilleiste erreicht wird.

Das erfindungsgemäß vorgesehene Verfahren zeichnet sich dadurch aus, daß das Metallband zwecks Herstellung des durchlaufenden Stegs mit den beidseitig daran angeordneten Sprossen in einem ersten Arbeitsschritt prägeschnittbearbeitet und hiernach zwecks Wiederherstellung der ursprünglichen glatten Oberfläche in einem zweiten Arbeitsschritt glattgewalzt wird, um eine Verstärkungseinlage mit glatt durchlaufenden Außenflächen und mit einer Vielzahl von Sprossen zu erhalten, die jeweils über ihre gesamte Länge mit ihren Längsrändern abstandsfrei aneinanderliegen.

Nach dem erfindungsgemäßen Verfahren wird also aus einem Metallband zumindest ein längsdurchlaufender Steg mit einer Vielzahl daran sitzender Sprossen gebildet und damit eine erhöhte Biegeelastizität erzielt, wobei aber - und das ist wesentlich - zwischen den Sprossen keine Freiräume sondern eine enge Anlage vorgesehen wird. Da das in Steg(en) und Sprossen aufgeteilte Metallband, nach dem es prägeschnittbearbeitet wurde, noch glatt gewalzt wird, liegt eine Verstärkungseinlage mit glatt durchlaufenden Außenflächen vor, so daß sich nach dem Umspritzen der Verstärkungseinlage am fertigen Profil auch keine Unregelmäßigkeiten abzeichnen können. Vielmehr weisen die nach dem erfindungsgemäßen Verfahren hergestellten Profilleisten nun die von der Verbraucherschaft seit langem geforderten glatten Oberflächen auf.

Ein Ausführungsbeispiel der Erfindung wird nachfolgend anhand der Zeichnung näher erläutert. Es zeigen

Fig. 1 eine als Fensterführungsprofil ausgebildete Profilleiste und

Fig. 2 bis 4 die in der Profilleiste nach Fig. 1 eingelagerte Verstärkungseinlage in drei Ansichten.

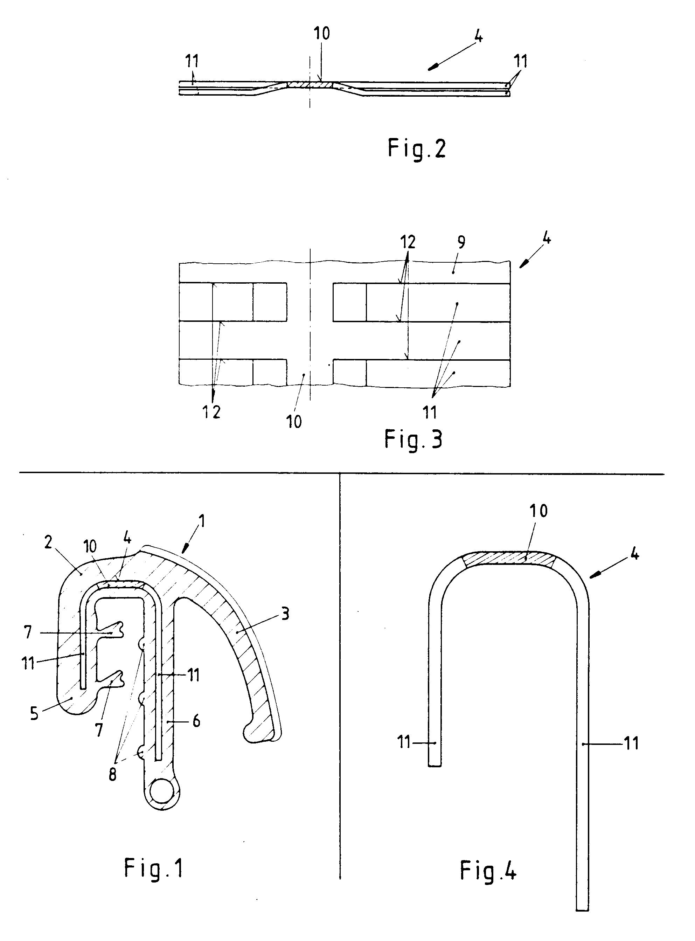

Die in Fig. 1 dargestellte Profilleiste dient als Fensterführungsprofil 1, weist ein etwa U-förmiges Hauptteil 2 mit einer daran angeformten Dichtlippe 3 und eine im Hauptteil 2 eingelagerte Verstärkungseinlage 4 auf. Das U-förmige Hauptteil 2 ist auf einen Karosserieflansch (nicht gezeigt), der z.B. einen Fensterausschnitt umgrenzt, aufsetzbar und wird am Karosserieflansch durch an den Innenseiten der Hauptteilschenkel 5, 6 angeformte Haltelippen 7 und Vorsprünge 8 zuverlässig gehaltert.

Die in den Fig. 2 bis 4 näher dargestellte Verstärkungseinlage 4 besteht aus einem prägeschnittbearbeiteten Metallband 9 mit der Besonderheit, daß dieses eine durchgehend glatte Oberfläche aufweist. Das Metallband 9 besitzt einen in Längsrichtung durchlaufenden Steg 10, an dem beidseitig freigeschnittene, senkrecht zum Steg 10 ausgerichtete Sprossen 11 praktisch abstandsfrei sitzen. Die abstandsfreie Anordnung der Sprossen 11 nebeneinander ergibt sich dadurch, daß diese lediglich durch einen Prägeschnitt und nicht durch eine Stanzöffnung voneinander getrennt sind. Bei der Herstellung der Verstärkungseinlage 4 wird demnach das Metallband 9 im Durchlaufverfahren mit Prägeschnitten 12 versehen, wodurch sich der durchlaufende Steg 10 und die beidseitig daran sitzenden Sprossen 11 ergeben. Durch die Prägeschnitte (vgl. Fig. 3) ergibt sich eine gewisse Verformung des Metallbandes 9 (vgl. Fig. 2). Diese Verformung wird in einfacher Weise wieder beseitigt, indem das Metallband 9, bevor es profiliert wird (vgl. Fig. 4) glattgewalzt wird, wonach Steg 10 und Sprossen 11 auf einer Ebene liegen.

Bei der Herstellung einer Profilleiste der z.B. in Fig. 1 gezeigten Art, wird wie folgt verfahren: Zunächst wird aus einem Metallband, wie anhand der Fig. 2 bis 4 beschrieben, eine Verstärkungseinlage 4 hergestellt, die hiernach beidseitig mit einer Haftvermittler-Beschichtung versehen wird. Die Verstärkungseinlage 4 wird sodann durch einen Querkopfextruder geführt und hier mit Gummi- od. dgl. Material umspritzt. Es liegt hiernach eine Profilleiste vor, die sich dadurch auszeichnet, daß sie eine glatte Außenfläche und damit ein besonders gutes Aussehen aufweist und dennoch eine den technischen Anforderungen völlig genügende Biegeelastizität besitzt.

**Patentansprüche**

1. Profilleiste insbesonders aus Gummi, vornehmlich für Fahrzeuge, mit einem U-förmigen Hauptteil (2), einer daran angeformten Dichtlippe (3) und mit einer im Hauptteil (2) eingelagerten, aus einem Metallband (9) gebildeten Verstärkungseinlage (4), die einen U-förmig profilierten Querschnitt aufweist und aus zumindest einem durchlaufenden Steg (10) mit einer Vielzahl von daran beidseitig angeordneten, senkrecht zum Steg (10) und parallel zueinander ausgerichteten Sprossen (11) besteht, wobei der Steg (10) und die Sprossen (11) jeweils über ihre gesamte Länge eine gleichbleibende Dicke aufweisen, dadurch gekennzeichnet, daß die beidseitige Anordnung der Sprossen (11) am Steg (10) so getroffen ist, daß die Sprossen (11) jeweils über ihre gesamte Länge mit ihren Längsrändern abstandsfrei aneinanderliegen, so daß die Profilleiste eine glattwandige Außenfläche aufweist.

2. Profilleiste nach Anspruch 1, dadurch gekennzeichnet, daß die Verstärkungseinlage (4), beidseitig eine Haftvermittler-Beschichtung aufweist.

3. Verfahren zur Herstellung einer Profilleiste nach Anspruch 1, wobei zunächst aus wenigstens einem Metallband (9) wenigstens eine aus zumindest einem durchlaufenden Steg (10) und einer Vielzahl von quer zur Bandlängsachse nebeneinander angeordneten, mit dem Steg (10) beidseitig verbundenen Sprossen (11) bestehende, einen etwa U-förmig profilierten Querschnitt aufweisende Verstärkungseinlage (4) gefertigt und diese hiernach im Extrusionsverfahren mit insbesondere Gummi umspritzt wird, dadurch gekennzeichnet, daß das Metallband (9) zwecks Herstellung des durchlaufenden Stegs (10) mit den beidseitig daran angeordneten Sprossen (11) in einem ersten Arbeitsschritt prägeschnittbearbeitet und hiernach zwecks Wiederherstellung der ursprünglichen glatten Oberfläche in einem zweiten Arbeitsschritt glattgewalzt wird, um eine Verstärkungseinlage (4) mit glatt durchlaufenden Außenflächen und mit einer Vielzahl von Sprossen (11) zu erhalten, die jeweils über ihre gesamte Länge mit ihren Längsrändern abstandsfrei aneinanderliegen.

## Claims

1. A profile strip especially of rubber, primarily for vehicles, having a U-shaped main part (2) and a sealing lip (3) formed thereon, and having a reinforcing inlay (4) incorporated in the main part (2) and formed from a metal band (9), which inlay possesses a cross-section profiled in U-form and comprises at least one continuous cross-piece (10) with a plurality of bilaterally arranged side-bars (11) aligned perpendicularly to the cross-piece (10) and parallel with one another, where the cross-piece (10) and the side-bars (11) each have a constant thickness over their entire length, characterised in that the bilateral arrangement of the side-bars (11) on the cross-piece (10) is made such that the side-bars (11) in each case lie against one another without spacing with their longitudinal edges, so that the profiled strip possesses a smooth-walled outer surface.

2. A profile strip according to Claim 1, characterised in that the reinforcing inlay (4) has an adhesion-communicating coating on both sides.

3. A method for the production of a profile strip according to Claim 1, in which firstly from a metal band (9) at least one reinforcing inlay (4), possessing a cross-section of U-shaped profile and comprising at least one continuous cross-piece (10) and a plurality of side-bars (11) arranged side by side transversely of the longitudinal axis of the band and connected on both sides with the cross-piece (10) is manufactured and this is thereafter surrounded by injection, by an extrusion method, with rubber especially, characterised in that the metal band (9) is worked by impression-cutting in a first working step, for the purpose of production of the continuous cross-piece (10) with the side-bars (11) arranged on both sides thereon, and thereafter rolled smooth for the purpose of restoration of the original smooth surface, in a second working step, in order to obtain a reinforcing inlay (4) with smooth continuous outer surfaces and with a plurality of side-bars (11), which in each case lie against one another with their longitudinal edges, without spacing.

## Revendications

1. Bande profilée, notamment en caoutchouc, prévue surtout pour des véhicules, comprenant une partie principale (2) en forme de U, une lèvre d'étanchéité (3) formée sur elle, et comprenant une garniture de renforcement (4) formée par une bande métallique (9) incorporée dans la partie principale (2), qui présente une section transversale profitée en forme de U et qui est constituée par au moins une partie de dos (10) continue avec une pluralité de branches (11) parallèles entre elles, perpendiculaires à la partie de dos (10) et disposées de chaque côté la partie de dos (10) et les branches (11) présentant respectivement une épaisseur régulière sur la totalité de leur longueur, caractérisée en ce que la disposition bilatérale des branches (11) sur la partie de dos (10) est telle que les branches (11) sont disposées respectivement les unes contre les autres et sans écartement sur la totalité de leur longueur par leurs bords longitudinaux, de manière que la bande profilée présente une surface externe à paroi lisse.

2. Bande profilée selon la revendication 1, caractérisée en ce que la garniture de renforcement (4) comprend sur ses deux côtés un revêtement en un agent adhésif.

3. Procédé pour réaliser une bande profilée selon la revendication 1, selon lequel on commence par réaliser à partir d'au moins une bande métallique (9) une garniture de renforcement (4) présentant une section transversale profilée sensiblement en forme de U, constituée par au moins une partie de dos continue (10) et une pluralité de branches (11) reliées de chaque côté à la partie de dos (10) et disposées les unes contre les autres transversalement à l'axe longitudinal de la bande, puis on recouvre cette garniture en particulier avec du caoutchouc pendant un processus d'extrusion, caractérisé en ce que la bande métallique (9) est soumise à une opération de découpage au cours d'une première opération pour réaliser la partie de dos continue (10) et les branches (11) disposées de chaque côté, puis est passée au laminoir au cours d'une seconde opération de façon à obtenir à nouveau la surface lisse d'origine et obtenir une garniture de renforcement (4) à surface externe continue et lisse, et comprenant une pluralité de branches (11) disposées respectivement sur la totalité de leur longueur les unes contre les autres sans écartement par leurs bords longitudinaux.

Fig.2

Fig.3

Fig.1

Fig.4